Europäisches Patentamt

European Patent Office

Office européen des brevets

(19)

(11) Veröffentlichungsnummer: **0 203 436**
**B1**

(12) **EUROPÄISCHE PATENTSCHRIFT**

(45) Veröffentlichungstag der Patentschrift:
29.11.89

(51) Int. Cl.⁴: **H02P 1/26, H02P 1/30**

(21) Anmeldenummer: 86106370.9

(22) Anmeldetag: 09.05.86

(54) Verfahren und Hochlaufeinrichtung zum Hochfahren einer Schleifringläufer-Asynchronmaschine.

(30) Priorität: 29.05.85 DE 3519138

(43) Veröffentlichungstag der Anmeldung:
03.12.86 Patentblatt 86/49

(45) Bekanntmachung des Hinweises auf die Patenterteilung:
29.11.89 Patentblatt 89/48

(84) Benannte Vertragsstaaten:
AT CH DE LI SE

(56) Entgegenhaltungen:
US-A- 4 481 455

ELEKTRISCHE BAHNEN, Jahrgang 82, Nr. 10,
Oktober 1984, Seiten 306-311, München; W. BETHGE et
al.: "Konstruktive Grundsätze für die neuen
Bahnstromumformer der Deutschen Bundesbahn"

(73) Patentinhaber: BBC Brown Boveri AG, Haselstrasse,
CH-5401 Baden(CH)

(72) Erfinder: Bruggisser, Walter, Schönbühlstrasse 33,
CH-5430 Wettingen(CH)
Erfinder: Knaffl, Berislav, Lindenhof 25,
CH-5430 Wettingen(CH)
Erfinder: Schäfer, René, Gerstenweg 7,
CH-5034 Suhr(CH)

**Beschreibung**

Bei der Erfindung wird ausgegangen von einem Verfahren zum Hochfahren einer Schleifringläufer-Asynchronmaschine nach dem Oberbegriff des Patentanspruchs 1. Die Erfindung betrifft auch eine Hochlaufeinrichtung zum Hochfahren einer Schleifringläufer-Asynchronmaschine.

Mit dem Oberbegriff nimmt die Erfindung auf einen Stand der Technik von Verfahren und Hochlaufeinrichtungen zum Hochfahren einer Asynchronmaschine Bezug, wie er aus der deutschen Firmenzeitschrift: Techn. Mitt. AEG-Telefunken 63 (1973) 7, S. 249 - 253 bekannt ist. Dort wird zum Hochlauf einer Frequenzumformergruppe von 50/16 2/3 Hz einer 3phasen-Asynchronmaschine über einen Anlasstransformator eine reduzierte Spannung zugeführt. Im Läuferkreis des Rotors ist dabei ein Flüssigkeitsanlasser vorgesehen, dessen Regelung den Anfahrstrom im Ständer der Asynchronmaschine auf etwa Nennstrom konstant hält. Die Anlaufzeit beträgt ca. 100 s. Nach Erreichen der Nenndrehzahl erfolgt die Einspeisung des Läuferkreises der Asynchronmaschine durch einen Steuerumrichter, der Strom und Spannung mit Schlupffrequenz erzeugt und damit die Drehzahl der Asynchronmaschine reguliert. Nach Zuschaltung der Erregung auf eine mit der Asynchronmaschine gekuppelte Einphasen-Synchronmaschine kann diese mit dem Netz synchronisiert werden.

Dieses Hochlaufverfahren erfordert
- einen grossen Aufwand an Starkstrom-Hilfseinrichtungen,
- viele Schalthandlungen im Starkstromteil beim Hochlauf,
- hohe Rotorspannungsfestigkeit beim Schalten und
- eine Auslegung der Umformergruppe für Einschaltstromstösse beim Umschalten und Zuschalten ans Netz.

Aus der US-A 4 481 455 sind ein Verfahren und eine Schaltung zum Hochfahren einer Asynchronmaschine bekannt, welche rotorseitig an eine Turbine eines Pumpspeicher-Kraftwerkes gekoppelt ist. Die Rotorwicklungen der Asynchronmaschine sind an einen Direktumrichter angeschlossen. Während einer 1. Anlaufstufe wird, bei kurzgeschlossenen Statorwicklungen der Asynchronmaschine, die Frequenz des die Rotorwicklungen speisenden Direktumrichters von 0 bis 0,5 $f_N$ ($f_N$ = Nennfrequenz von 50 Hz bzw. 60 Hz) erhöht. Danach werden die Statorwicklungen der Asynchronmaschine an eine reduzierte, nennfrequente Spannung angeschlossen. In einer 2. Anlaufstufe wird nun in untersynchronem Betrieb die Frequenz des Direktumrichters von 0,5 $f_N$ auf 0 verringert, wodurch die Asynchronmaschine auf Nenndrehzahl gebracht und dann statorseitig ans Stromnetz angeschlossen wird. Nachteilig dabei ist, daß zum Hochlauf der Asynchronmaschine eine reduzierte Spannung zur Verfügung gestellt werden muß und daß bei 50% der Nenndrehzahl die Statorwicklungen umgeschaltet werden müssen.

Die Erfindung, wie sie in den Patentansprüchen 1 und 3 definiert ist, löst die Aufgabe, ein Verfahren und eine Hochlaufeinrichtung zum Hochfahren einer Asynchronmaschine anzugeben, welche das Hochfahren der Asynchronmaschine auf Netzfrequenz mit einem geringeren Aufwand an Apparaten und Einrichtungen ermöglichen. Gleichzeitig sollen hohe Rotorspannungen im Stillstand und beim Schalten sowie Einschaltstromstösse beim Umschalten und Zuschalten der Asynchronmaschine an das Wechselstromnetz reduziert werden.

Ein Vorteil der Erfindung besteht darin, dass der Anlasstransformator, der Anlasswiderstand sowie die zugehörigen Schalter eingespart werden können, so dass eine erhebliche Verbilligung resultiert. Der ohnedies vorhandene Direktumrichter wird als Speisequelle für den Hochlauf verwendet.

Die Erfindung wird nachstehend anhand von Ausführungsbeispielen erläutert. Es zeigen:

Fig. 1 eine Schaltung zum Hochfahren eines rotierenden Frequenzumformers mit einer Asynchronmaschine und einer Synchronmaschine,

Fig. 2 eine Schaltung zum Hochfahren einer Asynchronmaschine mit Schleifringläufer in Nebenschlusslaufschaltung und

Fig. 3 eine Schaltung zum Hochfahren einer Asynchronmaschine mit Schleifringläufer in Reihenschlusslaufschaltung.

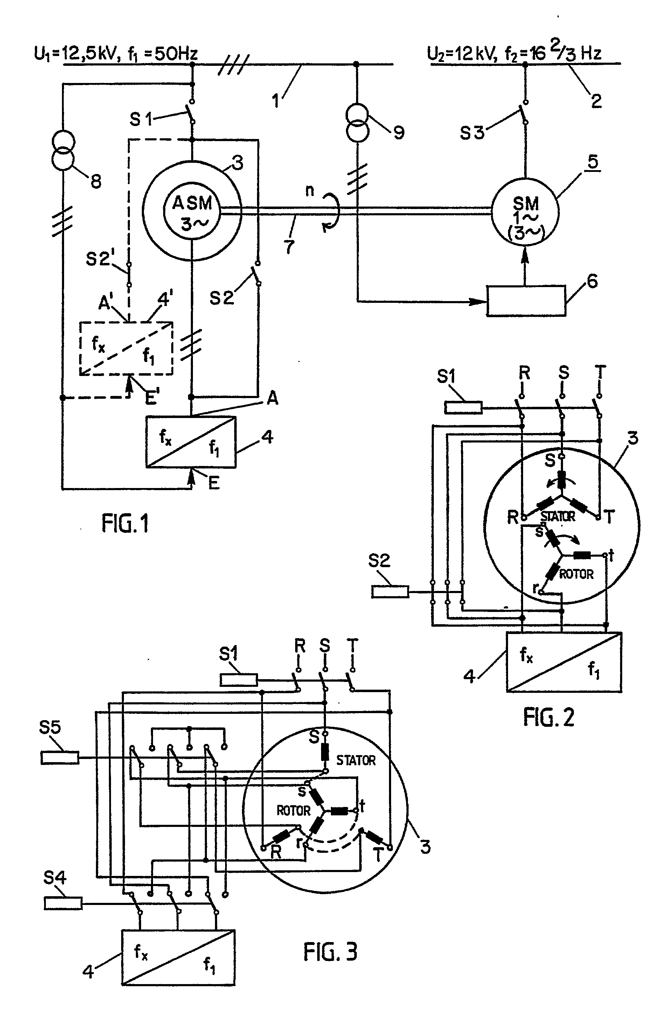

In Fig. 1 ist mit 1 ein 3phasiges Wechselstromnetz bzw. ein Drehstromnetz mit einer Wechselspannung von $U_1$= 12,5 kV und einer Netzfrequenz $f_1$= 50 Hz bezeichnet und mit 2 ein einphasiges Wechselstromnetz mit einer Wechselspannung von $U_2$= 12 kV und einer Netzfrequenz von $f_2$ = 16 2/3 Hz, wie es für Eisenbahnbetrieb üblich ist. Das Drehstromnetz 1 ist über einen Netzschalter S1 mit den Statorwicklungen einer Asynchronmaschine 3 verbunden. Die Rotorwicklungen der Asynchronmaschine 3 stehen mit einem Frequenzausgang A eines Umrichters bzw. Direktumrichters 4 in Verbindung, an dem eine einstellbare Frequenz $f_x$ zwischen 0 Hz und 26 Hz abgreifbar ist. Ein 3 x 3phasiger Eingang E des Direktumrichters 4 ist über einen Transformator 8, der 3 x 3 Phasen aufweist (nur einfach dargestellt), an das Drehstromnetz 1 angeschlossen. Der Ausgang A des Umrichters 4 ist ferner über einen Anlasstrenner bzw. Schalter S2 mit den Statorwicklungen der Asynchronmaschine 3 verbunden. Ein gestrichelt dargestellter zweiter Anfahr-Direktumrichter ist mit 4', ein weiterer Anlasstrenner mit S2' bezeichnet. Bei Vorhandensein eines zweiten Anfahr-Direktumrichters 4' können Rotor und Stator der Asynchronmaschine 3 unabhängig voneinander gespeist und geregelt werden.

Eine separate Stator- und Rotoreinspeisung ist auch möglich, wenn ein 12pulsiger Umrichter 4 der unter-/uebersynchronen Kaskade vorhanden ist. Hier kann der 12pulsige Umrichter in zwei 6pulsige Umrichter 4 und 4' umgeschaltet werden, mit je einem Umrichter für den Rotor und Stator.

Der Rotor der Asynchronmaschine 3 ist über eine Kupplungswelle 7 mit dem Rotor einer Einphasen-Synchronmaschine 5 starr gekuppelt. n bezeichnet die Drehzahl der Kupplungswelle 7. Die Statorwicklung der Synchronmaschine 5 ist über einen Netzschalter S3 mit dem einphasigen Wechselstromnetz 2 verbunden. Die Rotorwicklung der Synchronmaschine 5 ist von einem Gleichspannungserreger 6 gespeist, der eingangsseitig über einen Transformator 9 an das Drehstromnetz 1 angeschlossen ist.

Fig. 2 zeigt eine Asynchronmaschine 3 gemäss Fig. 1 in einer während des Hochlaufs verwendeten Nebenschlusslaufschaltung, wobei die drei Phasen des Wechselstromnetzes 1 und die Netzanschlusspunkte der Statorwicklungen der Asynchronmaschine 3 mit R, S und T und die Anschlüsse der Rotorwicklungen der Asynchronmaschine 3 mit r, s und t bezeichnet sind. Sowohl die Rotor- als auch die Statorwicklungen sind sternförmig geschaltet, wobei die Pfeile den entgegengesetzten Drehsinn von Staor- und Rotordrehfeld kennzeichnen.

Mit dem Ausführungsbeispiel gemäss Fig. 3 sind, im Unterschied zu dem Ausführungsbeispiel gemäss Fig. 2, für den Hochlauf die Stator- und Rotorwicklungen der Asynchronmaschine 3 mittels Wechselschaltern S4 und S5 in Reihenschluss-Laufschaltung (dargestellte Schaltposition) geschaltet.

Das Umschalten von der Reihenschluss-Laufschaltung gemäss Fig. 3 bzw. von der Nebenschluss-Laufschaltung gemäss Fig. 2 in die normale Kaskadenschaltung (S2 und S2' in Fig. 1 offen, S1 geschlossen) erfolgt nach Erreichen der Synchronisation. Der Rotor der Asynchronmaschine 3 wird dabei stets von dem Umrichter 4 gespeist; beim Hochfahren der Asynchronmaschine 3 zusätzlich auch der Stator. Der Drehsinn von Stator- und Rotordrehfeld ist gegenläufig gewählt.

Führt man beim Stator eines Drehstrommotors einen Strom der Frequenz $f_a$ zu und dem Rotor einen Strom der Frequenz $f_b$, so nimmt der Rotor eine Drehzahl
$$n = (f_a \mp f_b)/p \quad (1)$$
an, p = Polpaarzahl. Wenn das Rotordrehfeld denselben Drehsinn wie das Statordrehfeld aufweist, so gilt das Minuszeichen; bei entgegengesetztem Drehsinn der beiden Drehfelder gilt das Pluszeichen. Damit lässt sich durch doppelte Speisung des Motors vom gleichen Netz aus die doppelte synchrone Drehzahl einstellen, vgl. T. Bödefeld und H. Sequenz, Elektrische Maschinen, 8.Auflage, Springer-Verlag Wien, New York (1971), S. 276 und 277.

Während des Hochlaufs der Asynchronmaschine 3 sind die Schalter S1 und S3 offen; Schalter S2 und gegebenenfalls S2' geschlossen. Die einstellbare Frequenz $f_x$ am Ausgang A und gegebenenfalls A' der Umrichter 4 und gegebenenfalls 4' wird nun kontinuierlich von 0 Hz bis zu einer maximalen Frequenz von z.B.
$$f_{max} = 1,04 \times f_1/2 = f_{Rmax} = f_{Smax} \text{ entsprechend } (2)$$
$$n = 1,04 \times 2 \times f_{Smax} \times 60/p = 1,04 \times f_1 \times 60/p$$
$$= 1,04 \times n_s = 520 \text{ U/min} \quad (3)$$
erhöht, $f_{Rmax}$ = maximale Frequenz des Rotors, $f_{Smax}$ = maximale Frequenz des Stators, $n_s$ = Synchrondrehzahl der Asynchronmaschine 3, p = 6.

Nach dem Hochlauf werden nacheinander
- der Strom des Umrichters 4 und gegebenenfalls des Umrichters 4' auf 0 abgebaut,
- der Anlasstrenner S2 und gegebenenfalls S2' geöffnet bzw. S4 und S5 umgeschaltet,
- die Asynchronmaschine 3 über den Rotor in der Schaltung der über-/untersynchronen Kaskade erregt, bis die Spannung $U_S$ am Stator der Asynchronmaschine 3 gleich der Wechselspannung $U_1$ des Wechselstromnetzes 1 ist, und
- der Netzschalter S1 geschlossen.

Dadurch wird die Asynchronmaschine 3 im Auslauf stossfrei mit dem Landesnetz 1 synchronisiert und in den unter-/übersynchronen Betrieb übergeführt. Der Anschluss der Statorwicklungen der Asynchronmaschine 3 an das Landesnetz 1 mittels des Netzschalters S1 kann so z.B. bei n = 520 U/min ... 480 U/min, entsprechend 104 % ... 96 % der Synchrondrehzahl $n_s$ phasensynchron erfolgen.

Anschliessend erfolgt die Synchronisation der Einphasen-Synchronmaschine 5 mit dem Bahn- bzw. Wechselstromnetz 2 in bekannter Weise. Mittels des Umrichters 4 wird den Rotorwicklungen der Asynchronmaschine 3 ein schlupffrequenter Strom im Bereich von etwa -2,5 Hz bis +2,5 Hz eingeprägt und dadurch die Drehzahl variiert bis die Synchronisation der entsprechend erregten Synchronmaschine 5 erreicht ist. Danach wird der Netzschalter S3 geschlossen. Die Umformergruppe ist nun zur Leistungsübertragung zwischen dem 50-Hz- und dem 16 2/3-Hz-Netz bereit.

Rotierende Frequenzumformergruppen werden hauptsächlich für die Uebertragung elektrischer Energie im Bereich bis ca. 90 MW von einem Landesnetz mit einer Frequenz von 50 Hz oder 60 Hz in ein Bahnnetz mit einer anderen Frequenz von üblicherweise 16 2/3 Hz verwendet. Es kann aber auch Energie von dem Bahnnetz in das Landesnetz übertragen werden.

Die Schalter S2, S4 und S5 können für vergleichsweise kleine Schaltströme ausgelegt sein, da sie praktisch leistungslos geschaltet werden.

Anstelle der Einphasen-Synchronmaschine 5 ist selbstverständlich eine Mehrphasen-Synchronmaschine vorzusehen, wenn das Wechselstromnetz 2 mehrphasig ist. Die Schalter S4 und S5 können auch zu einem Schalter zusammengefasst sein.

## Patentansprüche

1. Verfahren zum Hochfahren einer Schleifringläufer-Asynchronmaschine (3), insbesondere eines rotierenden Netzkupplungsumformers mit einer statischen unter-/übersynchronen Stromrichterkaskade,

a) wobei die Asynchronmaschine (3) zumindest zu Beginn des Hochfahrens an einen Umrichter (4) angeschlossen und

b) bei Erreichen einer Umschaltdrehzahl, entsprechend der Netzfrequenz ($f_1$), deren Stator an das Wechselstromnetz (1; R, S, T) umgeschaltet wird,

dadurch gekennzeichnet,

c) dass während des Hochfahrens sowohl die Stator- als auch die Rotorwicklungen der Asynchronmaschine (3) von mindestens einem Umrichter (4, 4') mit zunehmender Frequenz gespeist werden,

d) wobei die Speisung der Asynchronmaschine (3) beim Hochfahren derart erfolgt, dass deren Statordrehfeld entgegengesetzt zu deren Rotordrehfeld rotiert.

2. Verfahren nach Anspruch 1, dadurch gekennzeichnet,

a) dass der Hochlauf zunächst bis zur Umschaltdrehzahl in Neben- oder Reihenschlusslaufschaltung erfolgt,

b) dass danach der Strom des Umrichters (4) auf 0 abgebaut,

c) dann die Statorwicklungen der Asynchronmaschine (3) von dem Umrichter getrennt und

d) die Asynchronmaschine im Auslauf über die Rotoreinspeisung mit der unter- und übersynchronen Stromrichterkaskade mit dem Wechselstromnetz (1) synchronisiert wird.

3. Hochlaufeinrichtung zum Hochfahren einer Schleifringläufer- Asynchronmaschine (3), insbesondere eines rotierenden Netzkupplungsumformers mit einer statischen unter-/übersynchronen Stromrichterkaskade, an eine Netzfrequenz ($f_1$) eines Wechselstromnetzes (1; R, S, T)

a) mit einem Umrichter (4), der ausgangsseitig an die Rotorwicklungen der Asynchronmaschine (3) anschliessbar ist, und

b) mit einem Netzschalter (S1), über den die Statorwicklung der Asynchronmaschine (3) an das Wechselstromnetz (1; R, S, T) anschliessbar sind, dadurch gekennzeichnet,

c) dass die Statorwicklungen der Asynchronmaschine (3) über mindestens einen Schalter (S2; S4, S5) an den Umrichter (4, 4') angeschlossen werden können.

4. Hochlaufeinrichtung nach Anspruch 3, dadurch gekennzeichnet,

a) dass die Asynchronmaschine (3) eine Schleifringläufermaschine ist und

b) dass die Stator- und Rotorwicklungen in Nebenschluss- oder Reihenschlusslaufschaltung angeschlossen sind, wobei im Betrieb Stator- und Rotordrehfeld entgegegesetzt rotieren.

5. Hochlaufeinrichtung nach Anspruch 4, dadurch gekennzeichnet,

a) dass der Umrichter (4) ein 12pulsiger Umrichter ist, der in zwei 6pulsige Umrichter umschaltbar ist, und

b) dass einer dieser 6pulsigen Umrichter (4) an die Rotorwicklungen und der andere dieser 6pulsigen Umrichter (4') an die Statorwicklungen der Asynchronmaschine (3) anschliessbar ist.

6. Hochlaufeinrichtung nach einem der Ansprüche 3 bis 5, dadurch gekennzeichnet, dass der Umrichter (4, 4') ein Direktumrichter oder ein zwangskommutierter Umrichter ist.

**Claims**

1. Method of running up a slipring-rotor asynchronous machine (3), in particular a rotating system-tie frequency converter with a static subsynchronous/supersynchronous static converter cascade,

a) the asynchronous machine (3) being connected, at least at the beginning of running-up, to a converter (4) and

b) on reaching a switchover speed, corresponding to the system frequency ($f_1$), its stator being switched over to the a.c. system (1; R, S, T), characterized

c) in that, during the running-up, both the stator windings and the rotor windings of the asynchronous machine (3) are fed with increasing frequency from at least one converter (4, 4'),

d) the feeding of the asynchronous machine (3) during running-up takes place in such a way that its stator rotating field rotates oppositely to its rotor rotating field.

2. Method according to Claim 1, characterized

a) in that the running-up takes place initially, up to the switching speed, in parallel or series connection,

b) in that subsequently the current of the converter (4) is reduced to 0,

c) then the stator windings of the asynchronous machine (3) are disconnected from the converter and

d) in running-down, the asynchronous machine is synchronized with the a.c. system (1) via the rotor field with the subsynchronous and supersynchronous static converter cascade.

3. Running-up device for running up a slipring-rotor asynchronous machine (3), in particular of a rotating system-tie frequency converter with a static subsynchronous/supersynchronous static converter cascade, to a system frequency ($f_1$) of an a.c. system (1; R, S, T)

a) with a converter (4), which can be connected on the output side to the rotor windings of the asynchronous machine (3), and

b) with a system switch ($S_1$) via which the stator windings of the asynchronous machine (3) can be connected to the a.c. system (1; R, S, T), characterized

c) in that the stator windings of the asynchronous machine (3) can be connected via at least one switch (S2; S4, S5) to the converter (4, 4').

4. Running-up device according to Claim 3, characterized

a) in that the asynchronous machine (3) is a slipring-rotor machine and

b) in that the stator windings and rotor windings are connected in parallel or series connection, stator rotating field and rotor rotating field rotating oppositely in operation.

5. Running-up device according to Claim 4, characterized

a) in that the converter (4) is a 12-pulse converter, which can be switched into two 6-pulse converters, and

b) in that one of these 6-pulse converters (4) can be connected to the rotor windings and the other of these 6-pulse converters (4') can be connected to the stator windings of the asynchronous machine (3).

6. Running-up device according to one of Claims 3 to 5, characterized in that the converter (4, 4') is a direct converter or a self-commutated converter.

## Revendications

1. Procédé pour le démarrage d'une machine asynchrone à rotor bobiné (3), en particulier d'un convertisseur de couplage au réseau tournant comportant un convertisseur en cascade hyposynchrone/hypersynchrone statique, suivant lequel:

a) la machine asynchrone (3), au moins au début du démarrage, est connectée à un convertisseur (4), et

(b) lorsqu'un régime de commutation est atteint, en fonction de la fréquence de réseau ($f_1$), son stator est commuté sur le réseau de courant alternatif (1: R, S, T), caractérisé en ce que:

c) pendant le démarrage, les bobinages du stator, ainsi que ceux du rotor de la machine asynchrone (3) sont alimentés à fréquence croissante par au moins un convertisseur (4, 4'),

d) l'alimentation de la machine asynchrone (3) lors du démarrage s'opérant d'une manière telle que son champ tournant de stator tourne dans un sens opposé à celui de son champ tournant de rotor.

2. Procédé suivant la revendication 1, caractérisé en ce que:

a) le démarrage s'effectue initialement jusqu'au régime de commutation dans un circuit de marche en dérivation ou en série,

b) qu'ensuite, le courant du convertisseur (4) est ramené à zéro,

c) les enroulements de stator de la machine asynchrone (3) sont alors séparés du convertisseur, et

d) la machine asynchrone en marche par inertie est synchronisée avec le réseau de courant alternatif (1) par l'intermédiaire de l'alimentation du rotor par le convertisseur en cascade hyposynchrone et hypersynchrone.

3. Dispositif d'accélération pour le démarrage d'une machine asynchrone à rotor bobiné (3), en particulier d'un convertisseur de couplage au réseau tournant au moyen d'un convertisseur en cascade hyposynchrone/hypersynchrone statique, à une fréquence de réseau ($f_1$) d'un réseau de courant alternatif (1; R, S, T):

a) comportant un convertisseur (4) qui peut être connecté à sa sortie aux bobinages de rotor de la machine asynchrone (3), et

b) un interrupteur de réseau (S1) par l'intermédiaire duquel les bobinages de stator de la machine asynchrone (3) peuvent être connectés au réseau de courant alternatif (1: R, S, T), caractérisé en ce que:

c) les enroulements de stator de la machine asynchrone (3) peuvent être connectés au convertisseur (4, 4') par l'intermédiaire d'au moins un interrupteur (S2; S4, S5).

4. Dispositif de démarrage suivant la revendication 3, caractérisé en ce que:

a) la machine asynchrone (3) est une machine à rotor bobiné, et

b) que les bobinages de stator et de rotor sont connectés dans un circuit de marche en dérivation ou en série, de sorte qu'en service, le champ tournant de stator et le champ tournant de rotor tournent en sens opposés.

5. Dispositif de démarrage suivant la revendication 4, caractérisé en ce que:

a) le convertisseur (4) est un convertisseur à douze impulsions, qui peut être commuté en deux convertisseurs à six impulsions, et

b) qu'un de ces convertisseurs à six impulsions (4) peut être connecté aux bobinages de rotor et l'autre de ces convertisseurs à six impulsions (4') peut être connecté aux bobinages de stator de la machine asynchrone (3).

6. Dispositif de démarrage suivant l'une quelconque des revendications 3 à 5, caractérisé en ce que le convertisseur (4, 4') est un convertisseur direct ou un convertisseur à commutation forcée.

FIG.1

FIG. 2

FIG. 3